# EUROPÄISCHE PATENTANMELDUNG

(11) **EP 2 634 449 A2**
(43) Veröffentlichungstag der Anmeldung: **04.09.2013**
(21) Anmeldenummer: 13152193.2
(22) Anmeldetag: 22.01.2013
(51) Int. Cl.: F16F 7/12, B60R 19/34

(54) **Vorrichtung mit einstellbarer Steifigkeit zum Aufnehmen einer Aufprallenergie und Verfahren zum Einstellen einer Steifigkeit einer Vorrichtung mit einstellbarer Steifigkeit**

(30) Priorität: 28.02.2012 DE 102012203033
(71) Anmelder: ROBERT BOSCH GMBH, 70442 Stuttgart (DE)
(72) Erfinder: Loosen, Stephan, 74395 Mundelsheim (DE)

(57) **Zusammenfassung**

Die Erfindung betrifft eine Vorrichtung (200) mit einstellbarer Steifigkeit zum Aufnehmen einer Aufprallenergie, wobei die Vorrichtung (200) ein Gehäuse mit mindestens einer in dem Gehäuse angeordneten ausrückbaren Matrize (140) zum Aufnehmen und Deformieren eines Deformationselements (110) bei einer Bewegung des Deformationselements (110) in einer durch die Aufprallenergie bedingten Vorschubrichtung (180) aufweist. Die Vorrichtung (200) umfasst ein in dem Gehäuse zwischen einer Innenwand des Gehäuses und der ausrückbaren Matrize (140) bewegbar angeordnetes Spulenelement (210), das ausgebildet ist, um basierend auf einem Fluss eines elektrischen Stroms in einer Spule (160) des Spulenelements (210) aus einer ersten Position in eine zweite Position oder aus der zweiten Position in die erste Position bewegt zu werden, wobei das Spulenelement (210) ferner ausgebildet ist, um in der ersten Position die ausrückbare Matrize (140) gegenüber einer in einer Querrichtung zu der Vorschubrichtung (180) wirkenden Radialkraft des Deformationselements (110) auszuhalten und in der zweiten Position die ausrückbare Matrize (140) für eine Bewegung zum Ausrücken durch die Radialkraft freizugeben.

## Beschreibung

### Stand der Technik

Die vorliegende Erfindung bezieht sich auf eine Vorrichtung mit einstellbarer Steifigkeit zum Aufnehmen einer Aufprallenergie, ein Verfahren zum Einstellen einer Steifigkeit einer derartigen Vorrichtung, auf ein entsprechendes Steuergerät sowie auf ein entsprechendes Computerprogrammprodukt.

Zum Schutz von Fahrzeuginsassen bei Kollisionen werden häufig Crashboxen bzw. Aufprallstrukturen eingesetzt. Diese ersetzen Strukturen im Vorderwagen und/oder im Heck eines Fahrzeugs und können nach einem Unfall ausgetauscht werden.

Die EP 1 792 786 A2 zeigt eine Crashbox zur Eingliederung zwischen einem Stoßfängerquerträger und einem Fahrzeuglängsträger eines Kraftfahrzeugs. Die Crashbox weist ein gehäuseartiges Deformationsprofil als Faltkonstruktion aus Metallblech und eine längsträgerseitige Flanschplatte auf, dadurch gekennzeichnet, dass die Flanschplatte als Bestandteil der Faltkonstruktion ausgebildet ist.

### Offenbarung der Erfindung

Vor diesem Hintergrund wird mit der vorliegenden Erfindung eine Vorrichtung mit einstellbarer Steifigkeit zum Aufnehmen einer Aufprallenergie, ein Verfahren zum Einstellen einer Steifigkeit einer Vorrichtung mit einstellbarer Steifigkeit, weiterhin ein Steuergerät, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Eine adaptive Crashstruktur kann auf Basis eines Verjüngungsabsorbers arbeiten. Hier wird bei einer Kollision ein Deformationselement, z. B. ein Rohr, durch eine oder mehrere in einem Gehäuse angeordnete Matrizen geschoben und dabei verformt bzw. verjüngt, um so die Aufprallenergie wirkungsvoll abzubauen. Durch eine wirksame Zu- und Abschaltung von Matrizenplatten kann der Verjüngungsdurchmesser variiert und somit die Steifigkeit der Crashstruktur angepasst werden. Beispielsweise kann eine für eine zweite Verjüngungsstufe der Struktur verwendete Matrize ausrückbar sein, d. h., bei Wegnahme einer Abstützung durch eine Radialkraft des Deformationselements nach außen gedrückt werden. Die Verjüngungskraft der Crashstruktur ist dann niedriger und es wird weniger Aufprallenergie abgebaut. Die Abstützung kann beispielsweise in Form eines Ringes vorliegen, der aus einer Position, in der er die ausrückbare Matrize abstützt, herausbewegt werden kann, um die Crashstruktur von der hohen in die niedrige Steifigkeit umzuschalten.

Beispiele für eine Umsetzung des Prinzips einer adaptiven Crashstruktur finden sich z. B. in einer Crashstruktur mit adaptiver Energieaufnahme durch ein Entfernen von Versteifungsrippen durch Schneidearbeit oder durch Verjüngung. Eine adaptive Crashbox kann einen integrierten Drucksensor aufweisen oder alternativ eine Sensorkonfiguration, die mit Hilfe von zwei Beschleunigungssensoren eine Soll-Steifigkeit der adaptiven Crashbox bestimmt und auch die Rückhaltemittel der passiven Sicherheit auslöst. Es besteht in diesem Zusammenhang die Möglichkeit einer Umsetzung einer schnellen und genauen Aktuatorik für eine in der Steifigkeit veränderbare Crashstruktur. Ferner kann eine adaptive Crashstruktur z. B. einen Wirbelstromaktuator oder ein elastisches Element mit einem integrierten Sensor aufweisen.

Mit dem hier vorgestellten Ansatz können durch einen Einsatz eines bewegbaren Spulenelements zur Abstützung bzw. Freigabe einer ausrückbaren Matrize einer adaptiven Aufprallstruktur zwei definierte Steifigkeiten der Aufprallstruktur bzw. Crashstruktur dauerhaft eingestellt werden. Entsprechend kann eine technische Lösung geschaffen werden, mithilfe derer zwischen diesen Steifigkeiten beliebig geschaltet werden kann, sodass in Abhängigkeit der Situation die passende Steifigkeit eingestellt werden kann.

So kann eine konstruktive Lösung zur Realisierung zweier stabiler Schaltzustände eines Aktuators adaptiver Crashstrukturen ohne Weiteres bereitgestellt werden. Die Schaltzustände können die Standardeinstellung, z.B. ein Zustand, in welchem eine hohe Steifigkeit eingestellt ist, und eine weitere Einstellung sein, in welcher eine geringere Steifigkeit der Crashstruktur eingestellt ist.

Vorteile der dargestellten Lösung sind, dass das Prinzip erlaubt, zwei Zustände dauerhaft einstellen zu können, da beide Zustände stabil sind. Insbesondere ist vorteilhaft, dass mit ein und demselben Aktuatorelement, nämlich dem Spulenelement, zwischen den Zuständen gewechselt werden kann. Die Lösung ist reversibel und damit mehr als einmal anwendbar. Die Realisierung weiterer Funktionen, wie z.B. einer Parkposition, wird durch die dargestellten Vorteile ermöglicht. Des Weiteren lässt sich auch eine Zustandserkennung des Aktuators mit dem dargestellten Konzept realisieren.

Die vorliegende Erfindung schafft eine Vorrichtung mit einstellbarer Steifigkeit zum Aufnehmen einer Aufprallenergie, wobei die Vorrichtung ein Gehäuse mit mindestens einer in dem Gehäuse angeordneten ausrückbaren Matrize zum Aufnehmen und Deformieren eines Deformationselements bei einer Bewegung des Deformationselements in einer durch die Aufprallenergie bedingten Vorschubrichtung aufweist, und wobei die Vorrichtung das folgende Merkmal aufweist:

ein in dem Gehäuse zwischen einer Innenwand des Gehäuses und der ausrückbaren Matrize bewegbar angeordnetes Spulenelement, das ausgebildet ist, um basierend auf einem Fluss eines elektrischen Stroms in einer Spule des Spulenelements aus einer ersten Position in eine zweite Position oder aus der zweiten Position in die erste Position bewegt zu werden, wobei das Spulenelement ferner ausgebildet ist, um in der ersten Position die ausrückbare Matrize gegenüber einer in einer Querrichtung zu der Vorschubrichtung wirkenden Radialkraft des Deformationselements auszuhalten und in der zweiten Position die ausrückbare Matrize für eine Bewegung zum Ausrücken durch die Radialkraft freizugeben.

Die Vorrichtung kann in einem Fahrzeug zum Schutz der Insassen bei einer Kollision des Fahrzeugs mit einem stationären Objekt oder einem beweglichen Objekt, wie beispielsweise einem weiteren Fahrzeug, installiert sein. Bei der Vorrichtung kann es sich um eine Crashstruktur wie z.B. einen Verjüngungsabsorber handeln. Der Verjüngungsabsorber basiert auf dem Prinzip einer Verformung, hier Verjüngung, des Deformationselements zum Aufnehmen und Abbauen der Aufprallenergie im Kollisionsfall. Die Steifigkeit kann dabei in Abhängigkeit von einer ermittelten Schwere der Kollision zwischen hoch und niedrig eingestellt sein. Entsprechend kann bei einer schweren Kollision und hoher eingestellter Steifigkeit eine umfangreiche Verformung des Deformationselements erfolgen, um eine hohe Aufprallenergie abzubauen. Bei einer leichten Kollision kann bei niedriger eingestellter Steifigkeit die Verformung des Deformationselements gering sein, da weniger Aufprallenergie absorbiert werden muss. Alternativ kann die Vorrichtung auch zur Vermeidung größerer Blechschäden an dem Fahrzeug selbst, beispielsweise beim Ein- oder Ausparken eines Fremdfahrzeugs, eingesetzt werden. In diesem Fall ist während einer Parkzeit des Fahrzeugs eine dauerhafte Einstellung auf die niedrige Steifigkeit sinnvoll. Die Vorrichtung kann in einem Vorderwagen und/oder in einem Heck des Fahrzeugs angeordnet sein.

Das Deformationselement kann als ein längliches Bauteil mit z. B. rundem Querschnitt ausgebildet sein. Das Deformationselement kann an einem dem Gehäuse zugewandten Ende eine Verjüngung aufweisen. Ansprechend auf die Kollision kann das Deformationselement in der Vorschubrichtung entlang seiner Längsachse durch das Gehäuse bewegt und dabei durch die ausrückbare Matrize aufgenommen und deformiert bzw. verjüngt werden, um die Aufprallenergie zu absorbieren. Das Gehäuse kann z.B. in Richtung einer Längserstreckung des Deformationselements angeordnet sein und z.B. in einer Ruhestellung der Vorrichtung lediglich einen zum Fahrzeuginneren ausgerichteten Endbereich des Deformationselements umfassen. Das Gehäuse kann beispielsweise aus zwei Gehäusehälften zusammengesetzt sein, wobei die eine Gehäusehälfte eine Öffnung zum Aufnehmen des Deformationselements in das Gehäuse und die andere Gehäusehälfte eine der Öffnung gegenüberliegende weitere Öffnung für einen Austritt des Deformationselements aus dem Gehäuse aufweisen kann. Das Gehäuse kann das Deformationselement oder Teile desselben bei der Bewegung des Deformationselements durch das Gehäuse vollumfänglich umschließen. Für die Unterbringung der ausrückbaren Matrize im Inneren des Gehäuses kann das Gehäuse eine Auswölbung aufweisen. Die Vorschubrichtung kann einer Fahrtrichtung des Fahrzeugs entgegengerichtet sein. Die Vorschubrichtung kann im Wesentlichen einer Aufprallrichtung auf das Fahrzeug entsprechen.

Die ausrückbare Matrize kann ausgebildet sein, um beim Eindringen des Deformationselements auszurücken, wenn die Vorrichtung nicht auf die hohe Steifigkeit eingestellt ist. In einer Ruhestellung der Vorrichtung kann die ausrückbare Matrize z.B. einen Ring bilden, dessen lichtes Maß geringer als ein maximaler Durchmesser des Deformationselements ist. Die ausrückbare Matrize kann zum kontrollierten Ausrücken Sollbruchstellen aufweisen. Die ausrückbare Matrize kann so in dem Gehäuse angeordnet sein, dass eine Außenwand der ausrückbaren Matrize von einer Innenwand des Gehäuses beabstandet ist. Beim Ausrücken kann die ausrückbare Matrize z. B. an den Sollbruchstellen brechen und durch die Radialkraft des eindringenden Deformationselements von dem Deformationselement weggedrückt, also zu der Innenwand des Gehäuses hingedrückt werden und somit keine Verjüngung des Deformationselements bewirken. Eine solche Bewegung der ausrückbaren Matrize, die im Wesentlichen quer zur Vorschubrichtung erfolgt, wird in der vorliegenden Beschreibung als "Ausrücken" der Matrize bezeichnet. Die Innenseite der ausrückbaren Matrize kann beispielsweise ganz oder teilweise schräg verlaufen, sodass die ausrückbare Matrize eine Art Trichter bildet, der bei hoher eingestellter Steifigkeit der Vorrichtung zu der Verjüngung des Deformationselements führen kann, während sich dieses aufgrund der Kollision an der Innenseite der ausrückbaren Matrize entlang bewegt.

Das Spulenelement kann aus einem Werkstoff gebildet sein, der ausreichend robust ist, um in der ersten Position die ausrückbare Matrize so gegenüber der Innenwand des Gehäuses abzustützen, dass ein Ausrücken der ausrückbaren Matrize auch bei eindringendem Deformationselement verhindert werden kann. Entsprechend kann das Deformationselement durch die ausrückbare Matrize verformt werden, wenn es sich bei einer Kollision des Fahrzeugs in der Vorschubrichtung entlang der Innenseite der ausrückbaren Matrize bewegt. Das Spulenelement kann einstückig, z. B. in Ringform, gebildet sein, oder es kann sich aus mehreren Einzelteilen, die voneinander beabstandet entlang der Innenwand des Gehäuses angeordnet sind, zusammensetzen. Das Spulenelement kann in der Vorschubrichtung aus der ersten Position in die zweite Position und entgegen der Vorschubrichtung aus der zweiten Position in die erste Position bewegt werden. In der ersten Position kann das Spulenelement vollständig mit einer Seitenwand an der Innenwand des Gehäuses und mit einer gegenüberliegenden Seitenwand an der ausrückbaren Matrize anliegen. In der zweiten Position kann das Spulenelement vollständig aus einer Ausrückbahn der ausrückbaren Matrize entfernt angeordnet sein. Das Spulenelement kann so ausgebildet sein, dass es die Spule vollständig umgibt. Bei der Spule kann es sich um eine Wicklung aus einem elektrisch leitfähigen Material, z. B. einem Kupferdraht, handeln. Die Spule kann über aus dem Spulenelement herausführende Leitungen mit einer elektrischen Stromquelle verbunden sein, um die Spule mit elektrischem Strom zu versorgen. Die Bewegung des Spulenelements zwischen der ersten und der zweiten Position kann mittels einer durch einen Stromfluss in der Spule erzeugten Magnetwirkung in Teilen der Vorrichtung erzielt werden. Beispielsweise kann der Fluss des elektrischen Stroms in der Spule jeweils zeitlich begrenzt sein, sodass eine kontrollierte und steuerbare Bewegung des Spulenelements aus der ersten in die zweite oder aus der zweiten in die erste Position und ein funktionsgerechter Verbleib des Spulenelements in der ersten Position oder der zweiten Position gewährleistet werden kann. Das Spulenelement kann insofern als ein Aktuator der erfindungsgemäßen Vorrichtung betrachtet werden, über den die Steifigkeit der Vorrichtung eingestellt werden kann.

Gemäß einer Ausführungsform kann das Spulenelement einen Spulenträger aufweisen. Der Spulenträger kann ausgebildet sein, um in der ersten Position eine die Radialkraft übersteigende Abstützkraft auf die ausrückbare Matrize gegenüber dem Gehäuse auszuhalten. Der Spulenträger kann die Spule vollumfänglich umfassen. Diese Ausführungsform weist den Vorteil auf, dass zum einen in der ersten Position des Spulenelements die ausrückbare Matrize sicher und gleichmäßig gegenüber der Radialkraft abgestützt werden kann. Zum anderen kann die Spule geschützt und so ihre Funktionalität stets gewährleistet werden.

Ferner kann die Vorrichtung eine in dem Gehäuse angeordnete nicht-ausrückbare Matrize zum Aufnehmen und Deformieren des Deformationselements aufweisen. Die nicht-ausrückbare Matrize kann der ausrückbaren Matrize in Bezug auf die Vorschubrichtung vorgelagert und an das Spulenelement angrenzend angeordnet sein. Die nicht-ausrückbare Matrize kann mit einer Außenwand an der Innenwand des Gehäuses anliegend in dem Gehäuse angeordnet sein. Ferner kann die nicht-ausrückbare Matrize durch das Deformationselement unzerstörbar, also aus einem robusteren Material als dieses gebildet sein, sodass der sich bei der Kollision in das Gehäuse bewegende Abschnitt des Deformationselements beim Eindringen in diese Matrize verjüngt werden kann. Vorteilhafterweise kann eine zu dem Spulenelement hin ausgerichtete Seitenwand der nicht-ausrückbaren Matrize eine Funktion als Anschlagelement für das Spulenelement bilden, sodass das Spulenelement noch sicherer in der ersten Position gehalten oder in diese zurückbewegt werden kann.

Insbesondere kann das Gehäuse und/oder die nicht-ausrückbare Matrize zumindest teilweise aus einem elektrisch und magnetisch leitfähigen Material bestehen, das ausgebildet ist, um eine durch den Fluss des elektrischen Stroms in der Spule des Spulenelements elektrisch induzierte Magnetkraft auf das Spulenelement auszuüben. Beispielsweise kann das Gehäuse und/oder die nicht-ausrückbare Matrize vollständig aus dem elektrisch leitfähigen Material gebildet sein oder mit diesem beschichtet sein. So kann die zum Bewegen des Spulenelements aus der ersten in die zweite Position oder aus der zweiten in die erste Position erforderliche Magnetkraft einfach bereitgestellt werden, ohne dass dafür zusätzliche Elemente in der Vorrichtung benötigt werden. Dies bietet den Vorteil, dass Bauraum gespart werden kann und der Wartungsaufwand der Vorrichtung geringer ausfällt.

Gemäß einer Ausführungsform kann die Vorrichtung ferner zumindest ein Federelement aufweisen. Das Federelement kann ausgebildet sein, um das Spulenelement folgend auf die Bewegung des Spulenelements in die erste Position in der ersten Position zu halten und/oder das Spulenelement folgend auf die Bewegung des Spulenelements in die zweite Position in der zweiten Position zu halten. Dazu kann das Federelement beispielsweise eine Rasteinheit aufweisen, die ein Zurückweichen der Feder des Federelements in eine Ursprungsposition verhindert. Die Feder des Federelements kann z. B. als eine Schraubenfeder ausgebildet sein. Diese Ausführungsform bietet den Vorteil, dass ein gemäß den Funktionsvorgaben der Vorrichtung dauerhafter Verbleib des Spulenelements in der ersten oder der zweiten Position auf einfache und robuste Weise realisiert werden kann. Auch ist diese Form der Funktionalitätsgewährleistung der Vorrichtung unabhängig von einer elektrischen Versorgung und bleibt somit funktionsfähig, auch wenn die elektrische Versorgung des Fahrzeugs oder von Teilen des Fahrzeugs ausfällt oder - z. B. während einer Parkzeit des Fahrzeugs - nicht vorhanden ist.

Beispielsweise kann das Spulenelement zumindest eine elektrische Leitung aufweisen, die die Spule mit einer außerhalb des Spulenelements angeordneten Leistungselektronik verbindet. Dabei kann die elektrische Leitung eine Länge aufweisen, die ausreichend ist, um die Bewegung des Spulenelements aus der ersten Position in die zweite Position oder aus der zweiten Position in die erste Position zuzulassen. Mithilfe der elektrischen Leitung kann auf einfache Weise ein zeitlich begrenzter Stromfluss in der Spule erzeugt werden, um so die zur Funktion der Vorrichtung erforderliche Magnetwirkung in dem Gehäuse und/oder der nicht-ausrückbaren Matrize bereitzustellen. Beispielsweise kann in der ersten Position des Spulenelements die Leitung eine Schlaufe bilden, über die für die Bewegung in die zweite Position erforderliches Leitungsmaterial bereitgestellt werden kann.

Gemäß einer Ausführungsform kann das Spulenelement mit einem Gleitkontakt eines Potenziometers gekoppelt sein. Das Potenziometer kann ausgebildet sein, um eine aktuelle Stellung des Spulenelements in der ersten Position oder in der zweiten Position oder zwischen der ersten Position und der zweiten Position zu bestimmen. So kann vorteilhafterweise eine Systemdiagnose dahingehend durchgeführt werden, festzustellen, ob sich z. B. das Spulenelement in der ersten Position oder der zweiten Position oder gar in einer durch eine Verkantung verursachten unerwünschten Zwischenposition befindet. So kann ein Fahrer des Fahrzeugs rechtzeitig darauf hingewiesen werden, eine Werkstatt aufzusuchen.

Die vorliegende Erfindung schafft ferner ein Verfahren zum Einstellen einer Steifigkeit einer Vorrichtung mit einstellbarer Steifigkeit zum Aufnehmen einer Aufprallenergie gemäß einer der im Vorangegangenen erläuterten Ausführungsformen, wobei das Verfahren den folgenden Schritt aufweist:

Erzeugen des Flusses des elektrischen Stroms in der Spule des Spulenelements, um das Spulenelement aus der ersten Position in die zweite Position oder aus der zweiten Position in die erste Position zu bewegen, um die Steifigkeit der Vorrichtung einzustellen.

Beispielsweise kann der Schritt des Erzeugens eine Bewegung des Spulenelements aus der ersten Position in die zweite Position auslösen, um die Steifigkeit der Vorrichtung auf die niedrige Stufe einzustellen. Diese Bewegung kann erfolgen, wenn im Kollisionsfall z. B. aufgrund von Sensordaten eine leichte Kollision festgestellt wurde. Alternativ kann die Bewegung auch auf ein Ausgeben eines Parksignals erfolgen, beispielsweise ansprechend auf ein Abschalten eines Motors des Fahrzeugs.

Das Verfahren kann beispielsweise in einem Steuergerät durchführt werden, das mit der im Vorhergehenden erläuterten Vorrichtung verbunden oder in diese integriert sein kann. Das Steuergerät kann ausgebildet sein, um die Schritte des erfindungsgemäßen Verfahrens in entsprechenden Einrichtungen der im Vorhergehenden erläuterten erfindungsgemäßen Vorrichtung durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Soffiniaremodule sein, die beispielsweise auf einem Mikrocontroller neben anderen Soffiniaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1A bis 1 D: Prinzipdarstellungen zur Funktionsweise einer Vorrichtung zum Aufnehmen von Aufprallenergie mit einstellbarer Steifigkeit;
- Fig. 2: einen Längsschnitt einer Vorrichtung zum Aufnehmen von Aufprallenergie mit einstellbarer Steifigkeit, gemäß einem Ausführungsbeispiel der vorliegenden Erfindung;
- Fig. 3: einen Detailausschnitt aus der Vorrichtung aus Fig. 2 mit einer Darstellung zweier möglicher Positionen des Spulenelements, gemäß einem Ausführungsbeispiel der vorliegenden Erfindung;
- Fig. 4: eine Prinzipdarstellung eines Spulenelements in Verbindung mit einem Potentiometer, gemäß einem Ausführungsbeispiel der vorliegenden Erfindung;
- Fig. 5: eine Prinzipdarstellung eines Fahrzeugs mit einer adaptiven Crashstruktur gemäß einem Ausführungsbeispiel der vorliegenden Erfindung; und
- Fig. 6: ein Ablaufdiagramm eines Verfahrens zum Einstellen einer Steifigkeit einer Vorrichtung zum Aufnehmen von Aufprallenergie mit einstellbarer Steifigkeit, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Die im Nachfolgenden erläuterten adaptiven Crashstrukturen ersetzen Teile bestehender Vorderwagenstrukturen in Kraftfahrzeugen. Beispielsweise können die hierin vorgeschlagenen Strukturen die Crashbox und den vorderen Teil der Längsträger ersetzen, kann aber auch an anderer Stelle im Lastpfad eingesetzt werden.

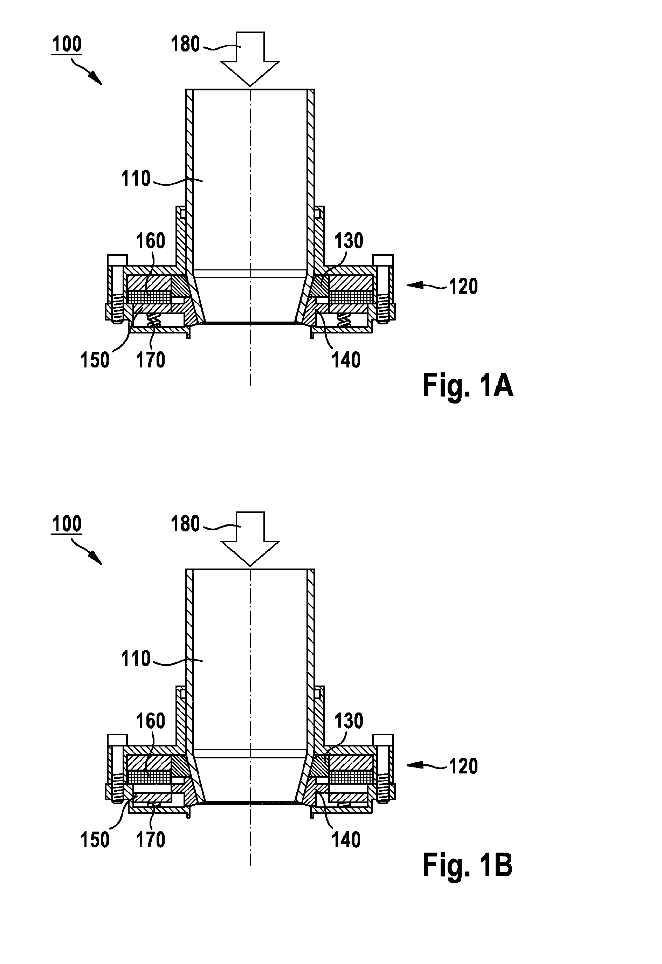

Figuren 1A bis 1D zeigen Prinzipdarstellungen zur Funktionsweise einer Vorrichtung 100 zum Aufnehmen von Aufprallenergie mit einstellbarer Steifigkeit. Die Darstellungen der Figuren 1A bis 1D zeigen jeweils einen Längsschnitt durch die Vorrichtung bzw. einen Abschnitt der Vorrichtung mit einstellbarer Steifigkeit bzw. adaptive Crashstruktur 100, wie sie beispielsweise in einen Vorderwagen eines Fahrzeugs installiert sein kann. Die adaptive Crashstruktur 100 umfasst ein Deformationselement 110, das hier als ein Rohr ausgebildet ist, sowie ein Gehäuse 120, in dem eine feste bzw. nicht-ausrückbare Matrize 130 und eine brechbare bzw. ausrückbare Matrize 140 angeordnet sind. Ferner umfasst die Vorrichtung 100 einen innerhalb des Gehäuses 120 verschiebbaren Ring 150 zur Abstützung bzw. Freigabe der ausrückbaren Matrize 140, eine angrenzend an den Ring 150 angeordnete stromführende Spule 160 und ein zwischen dem Ring 150 und einer weiteren Wand des Gehäuses 120 angeordnetes Federelement 170. Eine Aufprallrichtung bzw. Vorschubrichtung 180 des Deformationselements 110 entlang seiner mittels einer Punkt-Strich-Linie gekennzeichneten Längserstreckung ist durch einen Pfeil in der Darstellung gekennzeichnet. Die Punkt-Strich-Linie markiert auch eine Mittelachse der Crashstruktur 100.

Die adaptive Crashstruktur 100 weist in erster Hinsicht zwei Steifigkeiten auf. Die Grundeinstellung der Struktur 100 ist die höhere Steifigkeit, die der eines vorderen Längsträgers des Fahrzeugs entspricht. Die zweite Einstellung, auf die umgeschaltet wird, weist eine geringere Steifigkeit auf. Ebenfalls möglich ist es, die adaptive Crashstruktur 100 weiter hinten in der Frontstruktur einzubauen, d.h. als Ersatz eines hinteren Längsträgers. Die Struktur 100 kann ebenso für das Fahrzeugheck verwendet werden, auch wenn hierin lediglich der Vorderwagen betrachtet wird.

Im Falle hoher Aufprallgeschwindigkeiten und somit hoher Kollisionsenergien ist es vorteilhaft, frühzeitig ein hohes Energieabsorptionsniveau zu erreichen, weshalb die höhere Steifigkeit als Grundeinstellung sinnvoll ist. Im Falle geringer Kollisionsenergien ist eine niedrigere Steifigkeit erforderlich, damit die Struktur 100 durch die geringere eingeleitete Kraft verformt werden kann. Dadurch ergeben sich Vorteile bei der Insassenbelastung in Form einer in der Intensität geringeren, dafür aber längeren Belastung. Die beiden Niveaus werden mithilfe eines Aktuators eingestellt.

Fig. 1A zeigt ein Schnittbild der adaptiven Crashstruktur 100 in Ruhestellung. Hier ist der innerhalb des Gehäuses verschiebbare Ring 150 zwischen der ausrückbaren Matrize 140 und einer Wand des Gehäuses 120 angeordnet, sodass die ausrückbare Matrize 140 abgestützt ist. Entsprechend ist die Steifigkeit der Crashstruktur 100 hoch. Bei einer Kollision wird das Rohr bzw. Deformationselement 110 in die feste Matrize 130 und in die brechbare Matrize 140 geschoben und dabei stark verjüngt.

Fig. 1B zeigt ein Schnittbild der adaptiven Crashstruktur 100 in aktuierter Stellung. Hier ist der Ring 150 ansprechend auf einen Stromfluss in der Spule 160 nach unten verschoben. Kommt es nun zu einer Kollision, dringt das Rohr 110 ebenfalls in die feste Matrize 130 und in die brechbare Matrize 140 ein. Da der Ring 150 die brechbare Matrize 140 nicht abstützt, kann diese infolge der Aufprägung der Radialkraft durch das Rohr 110 brechen, z.B. an Sollbruchstellen, und ausrücken. Ein Verjüngungsgrad des Rohrs 110 ist somit verglichen mit der in Fig. 1A gezeigten Grundeinstellung geringer.

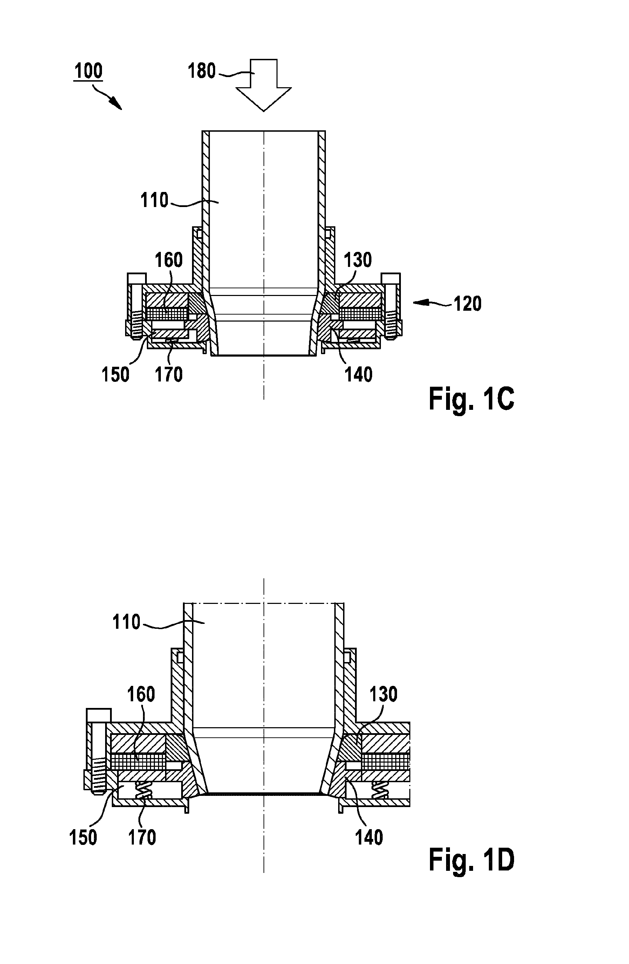

Fig. 1C zeigt ein Schnittbild der adaptiven Crashstruktur 100 im Kollisionsfall, und zwar bei weicher Einstellung, also niedriger Steifigkeit, wie sie anhand der Darstellung in Fig. 1B erläutert ist.

Fig. 1D zeigt einen Detailausschnitt aus der adaptiven Crashstruktur aus den Figuren 1A bis 1C. Hier ist der herkömmliche Konstruktionsstand des Aktuators, hier der Spule 160, deutlich zu erkennen. Bei dem Wirkprinzip der anhand dieser und der vorhergehenden Figuren erläuterten Konstruktion erfüllt der Ring 150 die Funktion der Blockierung der brechbaren Matrize 140. Ist diese blockiert, wird das Rohr 110 im Falle einer Kollision durch beide Matrizen 130, 140 gedrückt und dabei stark verjüngt. Somit liegt das Energieabsorptionsniveau hoch. Soll das Energieabsorptionsniveau niedrig liegen, so wird der Ring 150 durch das Wirbelstromprinzip verschoben. In diesem Fall ist die brechbare Matrize 140 nicht mehr abgestützt und sie kann im Zuge der Rohreindrückung bei einer Kollision ausrücken, womit ein niedriges Energieabsorptionsniveau eingestellt ist.

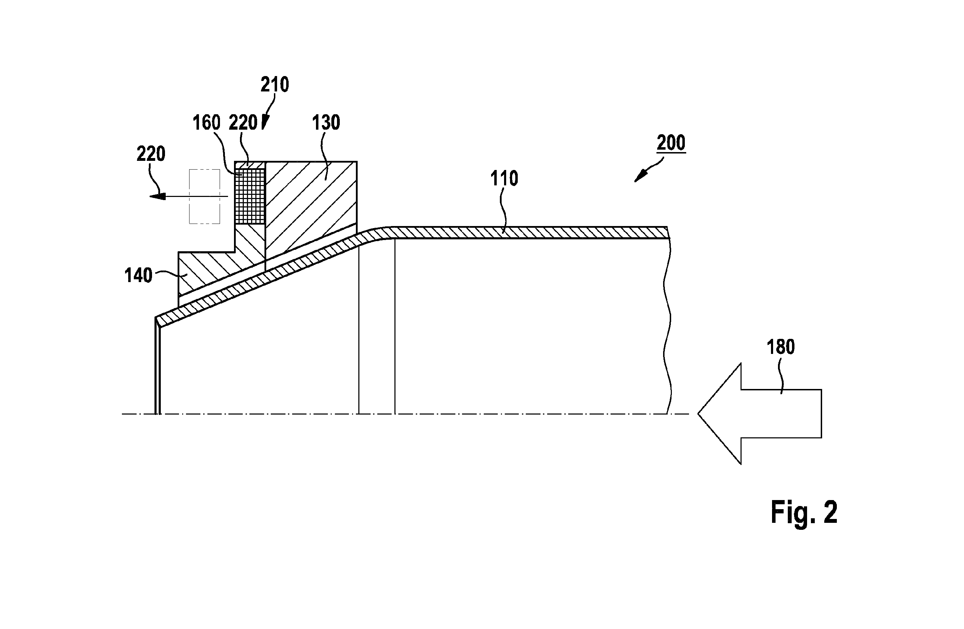

Fig. 2 zeigt in einer Längsschnittdarstellung einen Ausschnitt aus einer Vorrichtung 200 mit einstellbarer Steifigkeit zum Aufnehmen einer Aufprallenergie gemäß einem Ausführungsbeispiel der vorliegenden Erfindung. Die Vorrichtung 200 kann an einer Fahrzeugkarosserie, beispielsweise in einen hinter einer Fahrzeugfront gelegenen Vorderwagen eines Fahrzeugs installiert sein. Die Vorrichtung 200 ist als eine adaptive Crashstruktur mit zwei Kraftstufen realisiert und hier in einer Ruhestellung gezeigt.

Der in Fig. 2 gezeigte Grundaufbau der Vorrichtung 200 entspricht dem Aufbau der anhand der Figuren 1A bis 1D erläuterten Aufprallstruktur und umfasst das Rohr bzw. Deformationselement 110, die nicht-ausrückbare oder feste Matrize 130 sowie die brechbare bzw. ausrückbare Matrize 140. Die Spule 160 ist hier Teil eines Spulenelements 210, das sich aus der Spule 160 und einem die Spule 160 aufnehmenden und voll umgebenden Spulenträger 220 zusammensetzt. Der Spulenträger 220 ist aus einem Material gefertigt, das ausreichend robust ist, um einer Radialkraft des eindringenden Rohrs 110 entgegenwirken und die ausrückbare Matrize abstützen zu können. Alle genannten Elemente sind ganz oder - im Falle des Rohrs 110 - teilweise innerhalb eines Gehäuses der Vorrichtung 200 angeordnet, das hier allerdings nicht gezeigt ist. In Fig. 2 ist die Crashstruktur 200 - im Gegensatz zu der anhand der Figuren 1A bis 1D erläuterten Aufprallstruktur - um 90 Grad nach rechts gedreht dargestellt. Entsprechend ist die Vorschubrichtung 180 als ein nach links gerichteter Pfeil dargestellt. Zudem ist lediglich eine Hälfte des Ausführungsbeispiels der Vorrichtung 200 abgebildet, analog zu einer links von einer als Punkt-Strich-Linie gekennzeichneten Mittelachse in den Figuren 1A bis 1D dargestellten Hälfte der Vorrichtung 100. In Fig. 2 nicht gezeigt ist eine unterhalb der Punkt-Strich-Linie in der Darstellung angeordnete untere Hälfte des Schnitts durch die Vorrichtung 200, die im Wesentlichen identisch spiegelbildlich zu der gezeigten oberen Hälfte aufgebaut ist.

In der Darstellung in Fig. 2 ist das Spulenelement 210 in einer ersten Position gezeigt. In dieser ersten Position füllt das Spulenelement 210 einen Freiraum zwischen der ausrückbaren Matrize 140 und einer (nicht dargestellten) Innenwand des Gehäuses der Vorrichtung vollständig aus, sodass das Spulenelement 210 die ausrückbare Matrize 140 abstützt und ein Ausrücken derselben verhindert. Entsprechend ist die Vorrichtung 200 hier auf die hohe Steifigkeit eingestellt. Würde in dieser Position, beispielsweise infolge einer Kollision, das Deformationselement 110 in der Vorschubrichtung 180 einrücken, würden die feste Matrize 130 und die ausrückbare Matrize 140 eine umfangreiche Verformung des Deformationselements 110 bewirken und so eine hohe Aufprallenergie absorbieren. Ein Pfeil in der Vorschubrichtung kennzeichnet eine Bewegungsrichtung 220 des Spulenelements 210 aus der ersten in eine zweite Position, die hier anhand einer gestrichelt dargestellten Umrisslinie des Spulenelements 210 angedeutet ist. Befände sich das Spulenelement 210 in der zweiten Position, wäre die Vorrichtung 200 auf die niedrige Steifigkeit eingestellt. Mit einer Bewegung des Rohrs 110 in der Vorschubrichtung 180 würde die ausrückbare Matrize 140 infolge der von dem Deformationselement 110 ausgehenden Radialkraft ausrücken und könnte nicht zur Deformation des Deformationselements 110 beitragen. Es würde folglich weniger Aufprallenergie absorbiert werden. Die Bewegung des Spulenelements 210 aus der ersten in die zweite Position wird durch eine Ansteuerung eines Stromflusses in der Spule 160 ermöglicht, über den in der festen Matrize 130 und/oder in dem (nicht gezeigten) Gehäuse eine Magnetkraft induziert wird, die das Spulenelement 210 in der Richtung 220 aus der ersten Position in die zweite Position stößt.

Gemäß dem hierin anhand der Fig. 2 vorgestellten erfinderischen Ansatz wird das in den Figuren 1A bis 1D erläuterte Konzept von Spule und Ring verändert. Die Funktion des Rings als das Element, welches beim Schaltvorgang seine Position verändern soll, bzw. die brechbare Matrize 140 im Kollisionsfall abzustützen hat, wird von der Spule 160 übernommen. Dazu ist der Spulenträger 220 so ausgeführt, dass er die mechanische Belastung, die bei dem im Vorhergehenden erläuterten Wirkprinzip auf den Ring wirkt, dauerhaft aushält. Die Belastung ergibt sich zum einen durch den Schaltvorgang zwischen erster und zweiter Position, vor allem aber auch durch die Abstützkräfte, falls im Falle einer Kollision das Rohr 110 in die brechbare Matrize 140 gedrückt wird und diese am Ausrücken gehindert werden soll. Um den Wrbelstromeffekt zu nutzen, ist ein Bauteil notwendig, welches eine gute Leitfähigkeit aufweist, damit darin die Wirbelströme infolge des Strompulses durch die Spule 160 induziert werden können. Dies kann gegebenenfalls ein Bauteil selbst sein, welches die Eigenschaften aufweist, zum anderen aber auch eine Beschichtung auf einem Bauteil. Nach dem bisherigen Stand war dieses Bauteil der Ring bzw. ein beschichteter Ring. Bei dem anhand der Fig. 2 vorgestellten erfinderischen Konzept ist die Spule 160 bzw. das Spulenelement 210 selbst das bewegte Teil. Entsprechend werden die Leitungseigenschaften von der Spulenabstützung, also dem Gehäuse und/oder der festen Matrize 130, erfüllt. Die Spule 160 wird also beim Schalten aus ihrer Ruhelage in der ersten Position nach der zweiten Position verschoben.

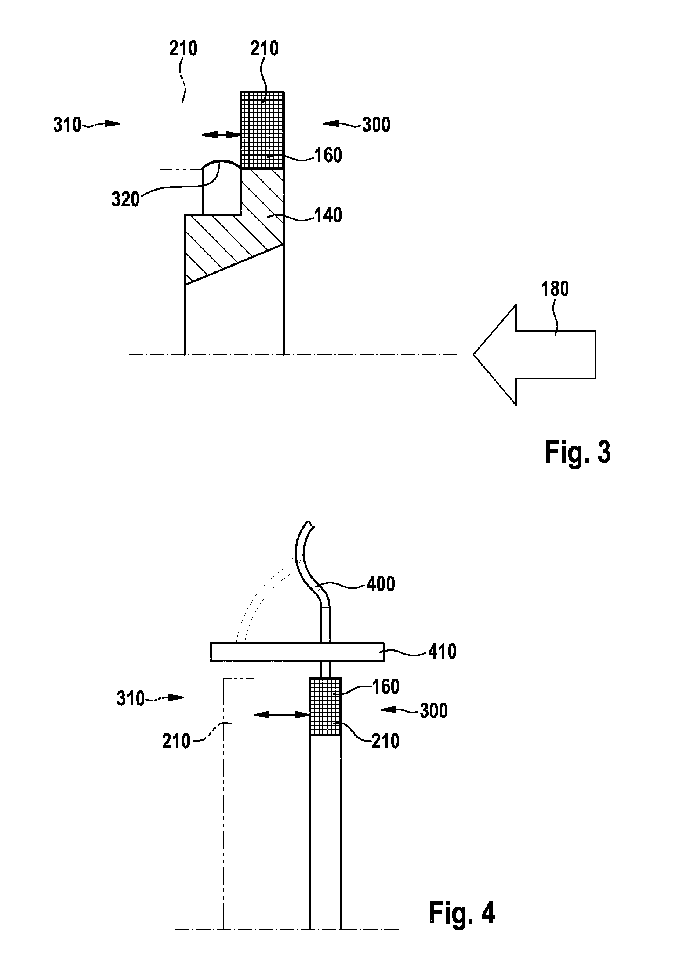

Fig. 3 zeigt die anhand der Fig. 2 vorgestellte Aktuatorik für Crashstrukturen in einem erläuternden Detailausschnitt. Die Darstellung zeigt in einem Bild die zwei möglichen Positionen, in denen sich das Spulenelement 210 in dem Ruhezustand oder folgend auf einen Schaltvorgang dauerhaft befinden kann. Somit zeigt die Darstellung in Fig. 3 nicht einen real möglichen Zustand der hier vorgestellten adaptiven Crashstruktur, sondern soll die Funktionalität der Crashstruktur erläutern. Rechts in der Zeichnung befindet sich das Spulenelement 210 in einer Ausgangslage in einer ersten Position 300, in der das Spulenelement 210 die ausrückbare Matrize 140 abstützt. Links in der Zeichnung befindet sich das Spulenelement 210 in einer aktuierten Lage in einer zweiten Position 310, in der das Spulenelement 210 die ausrückbare Matrize 140 zum Ausrücken freigibt. Ein Doppelpfeil kennzeichnet die Bewegbarkeit des Spulenelements 210 zwischen der ersten Position 300 und der zweiten Position 310 sowohl in der Vorschubrichtung 180 als auch entgegen der Vorschubrichtung 180, entsprechend dem eingestellten Schaltzustand der adaptiven Crashstruktur. Ein an dem Spulenelement 210 angeordnetes Federelement 320 ermöglicht ein dauerhaftes Verbleiben des Spulenelements 210 in der ersten Position 300 oder der zweiten Position 310, solange der jeweilige Schaltzustand erwünscht ist.

Die Darstellung in Fig. 3 erläutert ein hier vorgeschlagenes Konzept, mit dem das Verhalten der Spule 160 bzw. des Spulenelements 210 nach einer Bewegung z. B. aus der Ausgangsstellung, wie sie in Fig. 2 dargestellt ist, insofern beeinflusst werden kann, als das Spulenelement 210 in der ersten Position 300 oder der zweiten Position 310 verbleibt, solange dies erwünscht bzw. erforderlich ist. Damit kann zum einen verhindert werden, dass, falls eine Zeitspanne zwischen Schalten und Eindringen des Rohres im Kollisionsfall so lange ist, dass die Spule 160, z.B. durch einen Anschlag an ein Bauteil, zurück in ihre Ursprungslage, also die erste Position 300, kehrt, die Ausrückmatrize 140 unerwünschterweise zu blockieren droht, was ein Ausrücken der brechbaren Matrize 140 verhindern könnte. Um diese Problematik auszuschalten, wird das Federelement 320 eingesetzt, um die Spule 160, beispielsweise mithilfe einer Rasteinheit, im Ruhezustand in Ihrer Ausgangslage in der ersten Position 300 zu halten.

Des Weiteren kann auch eine Parkposition erwünscht sein, die eine weiche Crashstruktur erfordern kann, weshalb dauerhaft die Einstellung niedrigerer Steifigkeit bestehen soll. Der gewählte Schaltzustand soll dann dauerhaft anhalten. Sofern die Spule 160 bzw. das Spulenelement 210 in der ausgelenkten Stellung in der zweiten Position 310 verbleiben soll, z.B. im Fall der Parkposition, ist es notwendig, dass vorgesehen ist, in den Ausgangszustand, also die erste Position 300, zurückzuschalten. Mit der hierin vorgestellten Lösung wird dies möglich, da die ausgelenkte Lage der Spule die gleichen Bedingungen aufweist wie die Ruhelage. Entsprechend ist gleichermaßen ein Material in der Spulenanlage vorhanden, welches die Ausbildung von Wirbelströmen begünstigt. So erfolgt bei einem erneuten Strompuls durch die Spule 160 eine Abstoßung, die das Spulenelement 210 aus der zweiten Position 310 in die der Vorschubrichtung 180 entgegengesetzte Richtung, also zurück in ihre Ausgangslage in der ersten Position 300 bewegt. Der Ursprungszustand ist in diesem Falle wieder hergestellt.

Damit die Spule 160 bzw. das Spulenelement 210 in beiden Stellungen eine stabile Lage hat, kommt das Federelement 320 wie bereits erläutert zum Einsatz. Um die Spule 160 in beiden Positionen 300, 310 mit einem Strompuls beaufschlagen zu können, besteht in beiden Positionen 300, 310 ein Kontakt zu einer Stromquelle. Aufgrund des elektrischen Widerstands an der Kontaktstelle wird dieser Kontakt gemäß einem Ausführungsbeispiel über eine feste Verbindung hergestellt. Erforderliche Leitungen werden hier beispielsweise in einer Schlaufe verlegt, sodass sie die Bewegung des Spulenelements 210 nicht behindern und eine Bestromung der Spule 160 ständig möglich ist. Dieser Sachverhalt ist in der nachfolgenden Fig. 4 bildlich dargestellt. Abgesehen von der oben erläuterten Variante sind aber auch andere Möglichkeiten vorstellbar, um zwei stabile Lagen des Spulenelements 210 zu erreichen.

Fig. 4 zeigt die zwei möglichen Positionen 300 und 310 des Spulenelements 210 in einer Weiterführung des hier vorgestellten erfinderischen Konzepts. In der Darstellung in Fig. 4 sind Leitungen 400 gezeigt, die das Spulenelement 210 mit einer (nicht gezeigten) Leistungselektronik verbinden, um die Spule 160 für die Bewegung zwischen der ersten Position 300 und der zweiten Position 310 mit elektrischem Strom zu versorgen. Aus der Zeichnung ist ersichtlich, dass die Leitungen 400 eine ausreichende Länge besitzen, damit sich das Spulenelement 210 ungehindert zwischen der ersten Position 300 und der zweiten Position 310 bewegen kann. Mit Strichlinien ist ein Verlauf der Leitungen 400 angedeutet, wenn sich das Spulenelement 210 in der Position 310 befindet.

Bei dem in Fig. 4 dargestellten Ausführungsbeispiel des hier vorgestellten erfinderischen Ansatzes sind die Leitungen 400 spulennah an einem kleinen Schlitten bzw. Gleitkontakt 410 befestigt, der Teil eines (in der Darstellung nicht gezeigten) Potentiometers ist. Bei einer Positionsänderung des Spulenelements 210 zwischen der ersten Position 300 und der zweiten Position 310 wird ein Widerstand des Potentiometers verändert, sodass über eine Widerstandsbestimmung eine Bestimmung der Spulenelementposition möglich ist. Dazu ist ein (nicht gezeigtes) Verstellelement des Potentiometers, an welchem die Zuleitungen 400 zur Spule 160 befestigt sind, möglichst leichtgängig ausgeführt, um die Bewegung des Spulenelements 210 nicht zu behindern. Neben der Bestimmung der Endlagen 300, 310 ist es auch möglich, eine mögliche Zwischenstellung des Spulenelements 210 zu detektieren. Diese kann z. B. auftreten, wenn sich das Spulenelement 210 bei der Bewegung zwischen den Positionen 300 und 310 verkantet. So bietet die in Fig. 4 gezeigte Ausführungsform des erfinderischen Konzepts gleichzeitig eine Fehlerdiagnosemöglichkeit.

Die anhand der Darstellung in Fig. 4 erläuterte Positionserkennung kann genutzt werden, um zusammen mit der Parkposition 310 des Spulenelements 210 eine Systemdiagnose durchzuführen. Sofern es gewünscht ist, dass die adaptive Crashstruktur (ACS) beim Abstellen des Fahrzeugs durch Bewegen des Spulenelements 210 in die zweite Position 310 auf die niedrigere Steifigkeit umschaltet, kann dies durch ein Schalten erfolgen. Der Schaltvorgang ist mittels des Potenziometers überwachbar, d. h., sein Ergebnis kann bestimmt werden. Beim Fahrzeugstart ist dies in umgekehrter Richtung möglich. Für den Fahrzeugbetrieb wird beim Starten des Fahrzeugs durch Bewegen des Spulenelements 210 aus der zweiten Position 310 in die erste Position 300 zurück auf die harte Einstellung geschaltet. Dann kann der Vorgang erneut überwacht werden, und somit ist eine Systemdiagnose zum Fahrzeugstart erfolgt. Bei einer Fehlfunktion kann eine entsprechende Meldung an den Fahrer ausgegeben werden, die ihn zum Aufsuchen einer Werkstatt auffordert.

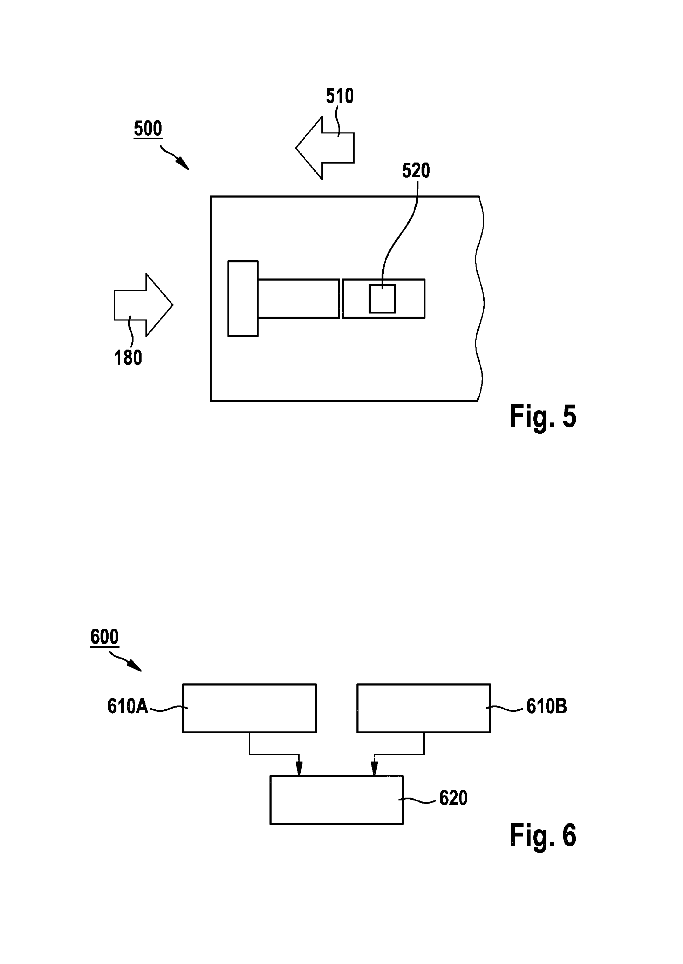

Fig. 5 zeigt eine Prinzipdarstellung eines Fahrzeugs 500 mit der adaptiven Crashstruktur, wie sie anhand der vorangegangen Figuren erläutert wurde. Gezeigt ist eine Frontstruktur des Fahrzeugs 500. Diese umfasst einen Querträger und daran anschließend die Vorrichtung 200, die hier den vorderen Längsträger ersetzt. Auch ein Ersatz des hinteren Längsträgers durch die Vorrichtung 200 ist möglich. Ferner kann die Crashstruktur 200 zusätzlich oder alternativ in einem Heck des Fahrzeugs 500 implementiert sein. Ein Pfeil kennzeichnet eine Fahrtrichtung 510 des Fahrzeugs 500. Ein weiterer Pfeil kennzeichnet die Vorschubrichtung 180, in der bei einer Kollision des Fahrzeugs 500, z.B. in Form eines Frontal- oder Schrägaufpralls, die Aufprallenergie zu absorbieren ist, und in der dementsprechend ein in Fig. 5 nicht gezeigtes Deformationselement der Vorrichtung 200 in der Vorrichtung 200 bewegt wird, um durch Deformation die Aufprallenergie zu absorbieren. Über ein Leitungssystem, z.B. einen CAN-Bus, ist die Crashstruktur 200 mit einem Steuergerät 520 des Fahrzeugs 500 gekoppelt. Das Steuergerät 520 ermittelt eine Kollisionsschwere bei einem Aufprall des Fahrzeugs 500 und gibt entsprechende Ansteuerbefehle an das Spulenelement der Vorrichtung 200 zum Abstützen bzw. Freigeben der ausrückbaren Matrize der Vorrichtung aus.

Fig. 6 zeigt ein Ablaufdiagramm eines Ausführungsbeispiels eines Verfahrens 600 zum Einstellen einer Steifigkeit einer Vorrichtung mit einstellbarer Steifigkeit zum Aufnehmen einer Aufprallenergie auf ein Fahrzeug, wie sie im Vorhergehenden ausführlich erläutert wurde. Das Verfahren 600 wird in Zusammenhang mit einem Steuergerät des Fahrzeugs, das mit der Vorrichtung elektrisch verbunden ist, im Falle einer Kollision oder eines Abstellens des Fahrzeugs durchgeführt. Gemäß dem hier gezeigten Ausführungsbeispiel des Verfahrens 600 ist die Vorrichtung vor einer Einleitung des Verfahrens 600 in einer Ruhestellung auf die hohe Steifigkeit eingestellt, d. h., das Spulenelement befindet sich in der ersten Position, in der es die ausrückbare Matrize abstützt. In einem Schritt 610A wird in dem Steuergerät basierend auf einem Sensorsignal eine Kollision geringer Schwere des Fahrzeugs festgestellt. In einem Schritt 610B wird z. B. mit einem Abschalten eines Motors des Fahrzeugs ein Abstellen zum Parken des Fahrzeugs ermittelt. Ansprechend auf den Schritt 610A oder den Schritt 610B wird in einem folgenden Schritt 620 ein elektrischer Stromstoß in der Spule des Spulenelements erzeugt, um mittels einer in Teilen der Vorrichtung induzierten Magnetkraft das Spulenelement aus der ersten Position in die zweite Position zu bewegen, um die Steifigkeit der Vorrichtung herabzusetzen. Alternativ oder zusätzlich kann das Verfahren 600 auch so erfolgen, dass die Vorrichtung von der niedrigen auf die hohe Steifigkeit umgestellt wird, beispielsweise, wenn das Fahrzeug gestartet wird, um eine zuvor eingenommene Parkposition zu verlassen. Dabei kann z. B. mit dem Anlassen eines Motors des Fahrzeugs ein Systemcheck zur Überprüfung einer Funktionsfähigkeit der Vorrichtung durchgeführt werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Vorrichtung (200) mit einstellbarer Steifigkeit zum Aufnehmen einer Aufprallenergie, wobei die Vorrichtung ein Gehäuse mit mindestens einer in dem Gehäuse angeordneten ausrückbaren Matrize (140) zum Aufnehmen und Deformieren eines Deformationselements (110) bei einer Bewegung des Deformationselements in einer durch die Aufprallenergie bedingten Vorschubrichtung (180) aufweist, und wobei die Vorrichtung das folgende Merkmal aufweist:
ein in dem Gehäuse zwischen einer Innenwand des Gehäuses und der ausrückbaren Matrize bewegbar angeordnetes Spulenelement (210), das ausgebildet ist, um basierend auf einem Fluss eines elektrischen Stroms in einer Spule (160) des Spulenelements aus einer ersten Position (300) in eine zweite Position (310) oder aus der zweiten Position in die erste Position bewegt zu werden, wobei das Spulenelement ferner ausgebildet ist, um in der ersten Position die ausrückbare Matrize gegenüber einer in einer Querrichtung zu der Vorschubrichtung wirkenden Radialkraft des Deformationselements auszuhalten und in der zweiten Position die ausrückbare Matrize für eine Bewegung zum Ausrücken durch die Radialkraft freizugeben.

2. Vorrichtung (200) gemäß Anspruch 1, **dadurch gekennzeichnet, dass** das Spulenelement (210) einen Spulenträger (220) aufweist, der ausgebildet ist, um in der ersten Position (300) eine die Radialkraft übersteigende Abstützkraft auf die ausrückbare Matrize (140) gegenüber dem Gehäuse auszuüben.

3. Vorrichtung (200) gemäß einem der vorangegangenen Ansprüche, **dadurch gekennzeichnet, dass** die Vorrichtung ferner eine in dem Gehäuse angeordnete nicht-ausrückbare Matrize (130) zum Aufnehmen und Deformieren des Deformationselements (110) aufweist, wobei die nicht-ausrückbare Matrize der ausrückbaren Matrize (140) in Bezug auf die Vorschubrichtung (180) vorgelagert und an das Spulenelement (210) angrenzend angeordnet ist.

4. Vorrichtung (200) gemäß Anspruch 3, **dadurch gekennzeichnet, dass** das Gehäuse und/oder die nicht-ausrückbare Matrize (130) zumindest teilweise aus einem elektrisch leitfähigen Material besteht, das ausgebildet ist, um eine durch den Fluss des elektrischen Stroms in der Spule (160) des Spulenelements (210) elektrisch induzierte Magnetkraft auf das Spulenelement auszuüben.

5. Vorrichtung (200) gemäß einem der vorangegangenen Ansprüche, **dadurch gekennzeichnet, dass** die Vorrichtung ferner zumindest ein Federelement (320) aufweist, das ausgebildet ist, um das Spulenelement (210) folgend auf die Bewegung des Spulenelements in die erste Position (300) in der ersten Position zu halten und/oder das Spulenelement folgend auf die Bewegung des Spulenelements in die zweite Position (310) in der zweiten Position zu halten.

6. Vorrichtung (200) gemäß einem der vorangegangenen Ansprüche, **dadurch gekennzeichnet, dass** das Spulenelement (210) zumindest eine elektrische Leitung (400) aufweist, die die Spule (160) mit einer außerhalb der des Spulenelements angeordneten Leistungselektronik verbindet, wobei die elektrische Leitung eine Länge aufweist, die ausreichend ist, um die Bewegung des Spulenelements aus der ersten Position (300) in die zweite Position (310) oder aus der zweiten Position in die erste Position zuzulassen.

7. Vorrichtung (200) gemäß einem der vorangegangenen Ansprüche, **dadurch gekennzeichnet, dass** das Spulenelement (210) mit einem Gleitkontakt (410) eines Potenziometers gekoppelt ist, wobei das Potenziometer ausgebildet ist, um eine aktuelle Stellung des Spulenelements in der ersten Position (300) oder in der zweiten Position (310) oder zwischen der ersten Position und der zweiten Position zu bestimmen.

8. Verfahren (600) zum Einstellen einer Steifigkeit einer Vorrichtung (200) mit einstellbarer Steifigkeit zum Aufnehmen einer Aufprallenergie gemäß einem der vorangegangenen Ansprüche, wobei das Verfahren den folgenden Schritt aufweist:
Erzeugen (620) des Flusses des elektrischen Stroms in der Spule (160) des Spulenelements (210), um das Spulenelement aus der ersten Position (300) in die zweite Position (310) oder aus der zweiten Position in die erste Position zu bewegen, um die Steifigkeit der Vorrichtung einzustellen.

9. Steuergerät (520), das ausgebildet ist, um den Schritt des Verfahrens (600) gemäß Anspruch 8 durchzuführen.

10. Computer-Programmprodukt mit Programmcode zur Durchführung des Verfahrens (600) nach Anspruch 8, wenn das Programm auf einem Steuergerät (520) ausgeführt wird.
